# EUROPEAN PATENT APPLICATION

(11) **EP 1 347 422 A1**
(43) Date of publication of application: **24.09.2003**
(21) Application number: 01951708.5
(22) Date of filing: 19.07.2001
(51) Int. Cl.: G07D 7/20, B65H 9/16, G07D 7/12

(54) **SYSTEM FOR RECOGNIZING AND VALIDATING BANKNOTES**

(30) Priority: 29.12.2000 ES 200003145
(71) Applicant: INVESTRONICA S.A., 28009 Madrid (ES)
(72) Inventor: RODRIGUEZ HERMIDA, David, E-28009 Madrid (ES); CID SANCHEZ, Fernando, E-28009 Madrid (ES); MUNOZ GARCIA, Enrique, E-28009 Madrid (ES)
(74) Representative: Toro Gordillo, Ignacio Maria
(86) International application number: ES0100286
(87) International publication number: WO02054358

(57) **Abstract**

The invention relates to a system comprising infrared radiation emitters (4), said radiation falling on the security measures on each banknote, and sensors (3) receiving the signals coming from the banknote (2), in addition to dragging means and means for laterally aligning the banknote. The signals received by the sensors are analyzed by a microcontroller in which the authenticity of the banknote is checked with the aid of an internal program of firmware. The dragging means consist of friction wheels (12) powered by a motor (10) that is activated when the sensor (3") detects the entrance of a bill (2). The lateral alignment means consist of a lateral, complementary wheel (12') that moves the banknote to one of the sides. The system also has an encoder (14) that is moved by the banknote (2) and a system for communicating with an external computer

## Description

### OBJECT OF THE INVENTION

The present invention refers to a system for recognizing and validating bank notes, a system which is embodied in a simple, easy to use device. The functioning is based on the digital analysis of analogical signals coming from several probes which seize them from the note itself by means of emitters in the infrared spectrum, signals which are internally, digitally treated in order to show the result of the operation on a displa y/screen. The probes send the different signals to a microcontroller which analyzes the different security measures incorporated in the notes, as well as the size thereof and other parameters.

The use of the system is directed to a segment of the market w hich does not have an intermediate, reliable and economical device for recognizing and validating bank notes/money, without discarding its application for being able to be integrated in more complex systems of handling bank notes, such as automatic teller machines, vending, recycling, sorting machines, etc.

### BACKGROUND OF THE INVENTION

The constant evolution of the image treatment techniques is making it possible for any person having the necessary means to reproduce all types of images, including security documents (such as bank notes, for example).

Due to this, manufacturers of notes incorporate sophisticated security elements in their production processes, which are generally difficult for the public to have access to and costly in their incorporation in the notes, and which obviously do not apply to the case described here. Many of these elements cannot be reproduced by the conventional commercial systems within reach of the general public.

Paper money validation systems are known whose object is to recognize it in order to establish the true nature of the note, there currently being a plurality of bank notes/money validation/recognition/detection systems/devices, whose features can be included in one of the following groups:
- Simple: the security measur es detected by these devices do not encompass the entire range of those considered important by the manufacturers themselves, and as a result, their degree of reliance leaves much to be desired. The acquisition price is normally very attainable.
- Complex: they truly check the majority, and in some cases, the entirety, of the security measures implemented by the manufacturers in bank notes. They are normally incorporated in complex money handling systems, such as notes recyclers and circulators, among others. Due to their high cost, their size and the volume of documents they treat, these systems are not normally accessible to the public, small merchants, nor to small and mid-sized companies.

### DESCRIPTION OF THE INVENTION

The proposed invention is directed to the segment of the market which does not have an intermediate device which is reliable and economical, and conceived for filling the gap existing in the field of recognizing and validating bank notes so that an efficient and secure recognition and validati on of the notes can be performed.

The system is based on the digital study of analogical signals seized in the notes themselves, in order to unequivocally assure the type of document, including several emitters of radiations in the infrared spectrum which make the latter act on the different security measures incorporated in the notes, such as water marks, the paper opacity, the security filament, the different types of inks, the different printing systems, etc. The emitters are of two types, one of transmission and the other of reflection, such that the signals reflecting the security measures of the note are seized by several probes which send them to a microcontroller where they are digitally treated, such that it is able to distinguish the authenticity thereof and its value. The signals are taken from the notes in movement, since it longitudinally passes through the device in which the system itself is embodied, the driving of the notes being carried out with the aid of a motor and a pulley which move mo unted driving and alignment wheels which, by means of friction, make the note pass through from the entrance towards the exit, by means of mirror wheels which facilitate a homogenous driving without damaging the note.

The introduction of the note into the device can be carried out in any of the possible positions, the mode of introduction not influencing in the recognition process and in the result of the operation.

The microcontroller includes a suitably protected firmware or internal program which analy zes the signals obtained by the probes and provides the result of the note validation/recognition operation, all of this such that means are included which permit adding up the values of the notes recognized as authentic and showing said value on a display.

The system also includes an internal memory for storing the data of the signals obtained from notes which are considered to be not authentic, and which can be analyzed in an external computer system after having sent them to it by means of a communicat ion port, through which data can be exchanged with those external computer systems.

It is also worth pointing out the fact that the system includes clear self-calibrating means for the user, such that each time it is put into operation, it facilitates bei ng accommodated to different working conditions environments, such as, for example, dirtiness, aging of the probes, etc.

In addition, its internal operating program or firmware, which is suitable protected, can be independently reloaded by means of introd ucing a printed document, similar to a bank note, which is deciphered and recognized by the system for updating the program; it can also be reloaded through the serial communications port from an external computer system.

It also includes a buttons panel associated to the display, and placed in an ergonomic arrangement for the user, it being possible to select the language preferred by the user and it being able to communicate with disabled persons when communicating the results of the notes recognition operations, such as through sounds for the blind.

The system uses an external feed source which takes energy from the existing electrical network and transforms the current into the functioning conditions thereof, it also being able to function by means of a current tap of the battery of an automotive vehicle, such as a taxi, a bus, a train, etc., and independently taking the energy from batteries, having means which keep the motor and the display turned off when it is not being used, with the corresponding energy saving.

Concerning introducing the note on the device which embodies the system, means have been foreseen which align said note towards a side edge for its correct position when it passes through the suitably positioned probes in the device.

The system has a menu configuration which permits performing the following operations, among others:
- Select the language at will in the interface with the user.
- Select the "disabled user" mode.
- Adjust the display bias lighting and contrast.
- Access to the firmw are reloading routine, which has its own menu.
- Access to the maintenance routine, which has its own menu.

### DESCRIPTION OF THE DRAWINGS

In order to complement the description being made and with the object of helping to better understand the features of the invention, according to a preferred practical embodiment example thereof, a set of drawings are attached as an integral part of said description, which with an illustrative and non-limiting character, show the following:

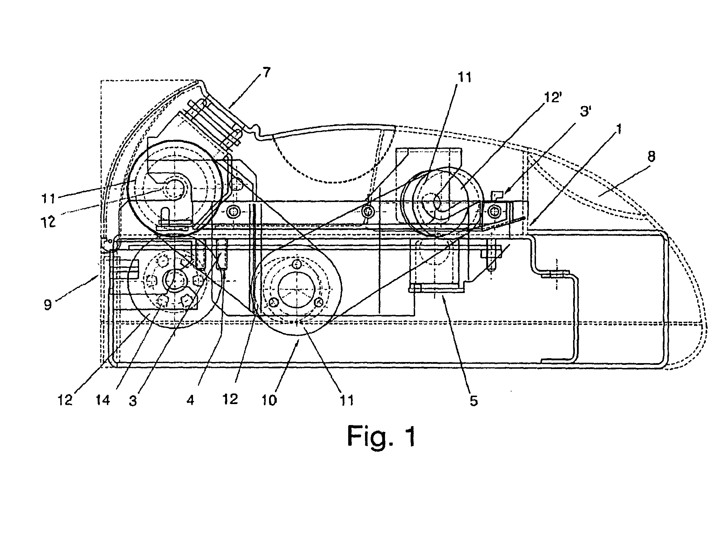

Figure 1. - shows a side elevation al representation of the device which embodies the recognition/validation system object of the invention.

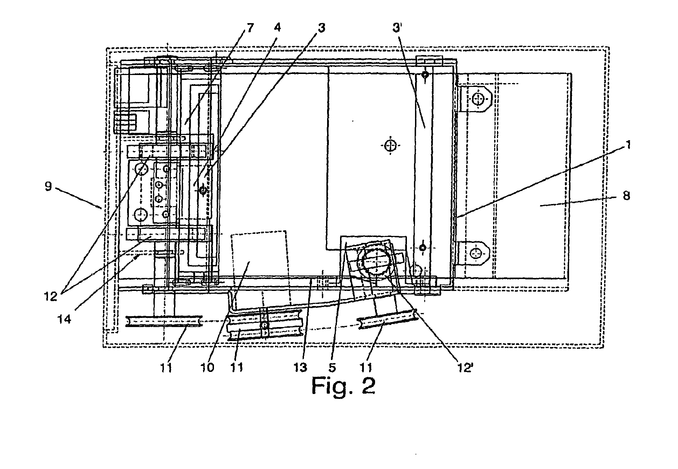

Figure 2 shows a plan view of the device shown in the previous figure.
Figure 3 shows a scheme corresponding to a note and to the trajectory which s hows the longitudinal scan for the detection thereof.
Figure 4 shows the scheme corresponding to the work flow of the device shown in figures 1 and 2.

### PREFERRED EMBODIMENT OF THE INVENTION

In view of the mentioned figures, it can be seen how the device which embodies the system of the invention comprises a slit (1) for the entrance of the corresponding note (2), as well as a series of suitably placed probes (3) and intended for recognizing the security measures to be checked, also comprising emitters (4) in the infrared spectrum, which act on the different security measures incorporated in the notes, all of this such that the signals originating from the security measures are seized by the probes (3) and sent from them to a microcontroller (5) where they a re digitally treated in order to distinguish the authenticity of the note (2) and its value.

Passing said note (2) is longitudinally carried out through the device, in which said emitters (4) are located, which "light" the note (2) at different points, the nu6mber of these depending on the currency to be analyzed, four or more being possible.

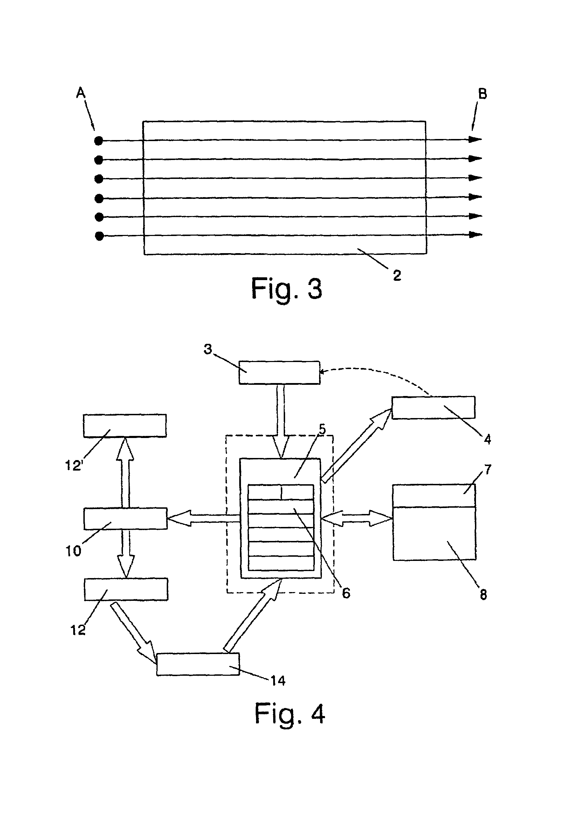

For their part, the probes (3), which receive the signals from the note (2) which is "lit" by the emitters (4), which are of two types, transmission and reflection, the seizure of these signals being carried out by means of the longitudinal scan of the note (2), such that the signals originating from the transmission and reflection of the note's infrared projection are taken, as shown in figure 3, where the end part A corresponds to the location of the probes, and the end part B corresponds to the outlet in the longitudinal scan.

The microcontroller (5) includes a previously installed internal program or firmware (6) which analyzes the signals processed by said microcontroller (5), providing the result of the operation to the display (7) on which they are shown, this display (7) being complemented with a block of buttons (8). The note (2), which is constantly in view of its bearer, passes through the device up to the outlet (9), thus proceeding to processing the seized signals thereof.

The system also includes several note (2) driving means in order to facilitate its longitudinal range, a driving which is carried out with the aid of a motor (10) and several pulleys (11) which move mounted wheels (12) for driving, there being an inclined wheel (12') for aligning the note (2) once it has entered into the device, and whose alignment consists of shifting and aligning that note (2) on the side edge (13) so that the probes (3) suitably and correctly act. The mounted wheels (13) act by means of friction for passing the note (2) through, there being mirror wheels in order to facilitate the homogenous driving without damaging the note.

The system also includes a standard commun ication output with other computer systems, with the object of aiding the exchange of data, such as updating features to be recognized, performing remote tests in the case of a breakdown, extending its field of action to a new type of notes to recognize, etc., it also being possible to reload the firmware from a remote system.

The firmware, which comes pre -loaded from the factory and duly protected, can be reloaded by different processes, such as connecting the device to an external computer system through the communications port, performing the loading on line, or introducing a document with determined codes which are recognized by the probes for updating said firmware.

The system operation is carried out through the buttons panel (8), placed in an ergono mic position for the user, with the aid of the display (7), which has adjustable bias lighting.

In order to gain access to the configuration menu, it will be necessary for the user to introduce a password, with the object of preventing improper use of th e system, it also having means which permit the user to select the language he prefers; the system has the capacity to intercommunicate with disabled persons when communicating the results of the notes recognition operations, such as, for example, through sounds for the blind.

As mentioned, introducing the note (2) into the device can be performed in any of the four possible positions, this enormously aiding the user in the operations.

Finally, it is important to mention that due to the special features in reference to size and autonomy of the apparatus, it can be integrated in a larger money operation system, for example in automatic teller machines, vending, recycling, sorting machines, etc.

On the basis of the previously mentioned features, the operation is as follows:

The note (2) is introduced through the slit (1), such that in the moment that the note (2) is detected, the probes (3') send a signal to the microcontroller (5) in order to actuate the motor (10) and start up the driving mechanism driven by said motor (10), at the same time that the display (7) is turned on.

The driving mechanism, through the wheels (12), drives the note (2), while the wheel (12') aligns it on the side edge (13) of the device, with which the suitably located probes (3) will analyze the different security measures of the note (2), those signals being processed by the microcontroller (5) and the result shown on the display (7).

The system also includes an encoder (14), which is moved by several mirror wheels which in turn are moved by the note (2) upon being driven by the friction of the wheels (12); the note (2) is moved by the motor (10) itself through the driving wheels (12) and it is foreseen that the encoder (14) permits sending a signal to the microcontroller (5) whic h will serve for determining the length of the note (2), among other features. The mirror wheels rotate at the passing speed of the note, without being influenced by the possible speed variations of the motor and of the mechanical driving systems. In other words, once the note (2) has passed in front of the emitters (4) and probes (3), the microcontroller (5) receives the signals containing the features of the note (2) to be validated/recognized, processing said signals and determining the authenticity thereof and its face value.

## Claims

1. Bank notes recognition/validation system which, being foreseen for independently performing the recognition and validation of bank notes, being based on the digital study of analogical signals seized from the respective note intended to be recognized, unequivocally assuring the type of document that it is, is **characterized in that** it comprises several infrared radiations emitters (4) which are made to act on the corresponding security measures which notes (2) are normal ly provided with, also comprising several probes (3) which receive the signals of the note (2) "lit" by the emitters (4), those being sent to a microcontroller (5) where they are digitally treated on the basis of the suitable internal program or firmware ( 6) in order to distinguish both the authenticity and the value of the note (2) itself; note driving and alignment means having been foreseen, the signals being taken by means of a longitudinal scan of the note while in movement.

2. Bank notes recognition /validation system according to claim 1, **characterized in that** the infrared spectrum emitters (4) are of the transmission type and reflection type.

3. Bank notes recognition/validation system according to previous claims, **characterized in that** it include s a display (7) of the results obtained by processing the signals, which is carried out by the microcontroller (5).

4. Bank notes recognition/validation system according to previous claims, **characterized in that** the note (2) driving means are constituted of several friction wheels (12) actuated as from a motor (10), whose actuation is established as from the detection of the note (2) performed by the corresponding probes (3'); a side wheel (12') and complementary to the driving wheels (12) having been foreseen for aligning the note (2) towards the side edge (13) of the zone through which said note (2) is longitudinally shifted.

5. Bank notes recognition/validation system according to previous claims, **characterized in that** the note (2) can be introduced a nd processed in any of the four possible positions.

6. Bank notes recognition/validation system according to previous claims, **characterized in that** it includes an encoder (14) moved by the note (2) when it passes through the system, the note (2) is in tu rn moved by the actuating motor (10) itself, said encoder (14) foreseen for sending a signal which permits determining the length of the note (2), among other features.

7. Bank notes recognition/validation system according to previous claims, characteriz ed in that it has a communication port through which data can be exchanged with external computer systems, it also being provided with an internal memory for storing data of the signals obtained from notes (2) which are not recognized and which can be anal yzed in an external computer system after having sent them to it by means of the standard communication port.

8. Bank notes recognition/validation system according to previous claims, **characterized in that** the internal operating program constituting the firmware (6) can be independently and suitably reloaded by means of introducing a printed document which is deciphered and recognized for updating the program.

9. Bank notes recognition/validation system according to previous claims, **characterized in that** it can include clear self-calibration means for the user, thus allowing it to be accommodated to different environments or working conditions, each time it is started up.
